Europäisches Patentamt

European Patent Office

Office européen des brevets

(11) Veröffentlichungsnummer: **0 079 548**

**A2**

# (12) EUROPÄISCHE PATENTANMELDUNG

(21) Anmeldenummer: 82110228.2

(22) Anmeldetag: 06.11.82

(51) Int. Cl.³: **G 01 F 11/26**

(30) Priorität: 14.11.81 DE 3145357

(43) Veröffentlichungstag der Anmeldung:
25.05.83 Patentblatt 83/21

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf 1(DE)

(72) Erfinder: vom Hofe, Dieter
Uedesheimerweg 2
D-5000 Köln 71(DE)

(72) Erfinder: Vierkötter, Peter
Sperberweg 7
D-5090 Leverkusen 3(DE)

(54) Verschluss eines Verpackungsbehälters.

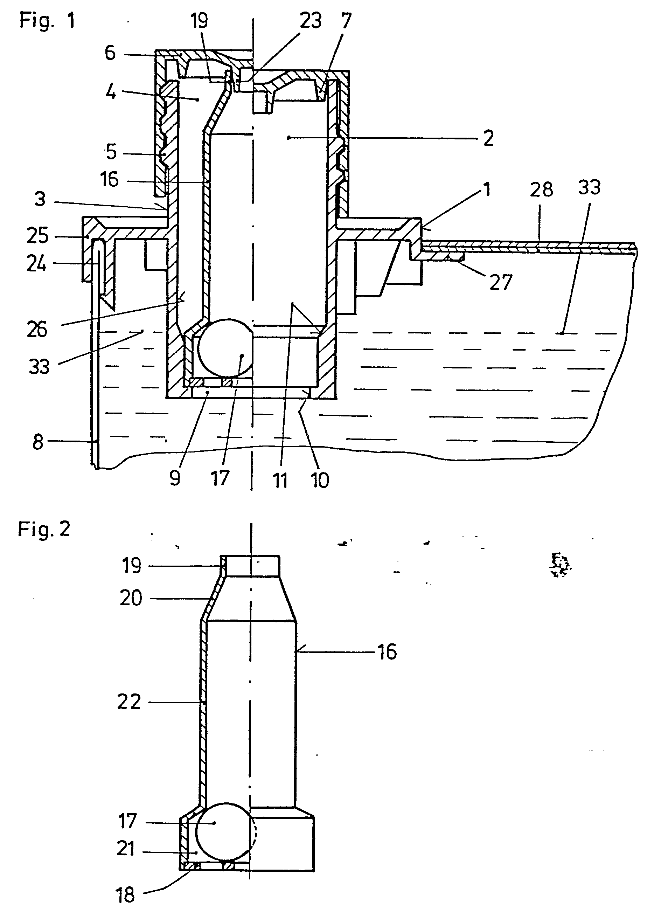

(57) Bei einem Verschluß eines Verpackungsbehälters (8) für flüssiges oder rieselfähiges Produkt mit mechanisch stabilisierender Hülle und dichtender Auskleidung (33) werden Hülle und Auskleidung mit Hilfe eines an ihre Öffnungen adaptierten Deckels (1) miteinander gekoppelt. Es soll eine wiederverschließbare, auch zur Aufnahme hygroskopischer Pulverprodukte abzudichtende Ausgießöffnung aufweisende Verpackung geschaffen werden. Erfindungsgemäß ist in die Produktaustrittsöffnung (2) eines auf die Hülle adaptierten Deckels (1) ein durchgehender Rohrstutzen (3) mit darin einzusetzendem, einen Dichtkonus (19, 20) mit Ventilkugeldichtsitz (20) am Auslaßende und eine Kugelkammer (22) am Einlaßende besitzender Kugelkäfig (16) mit frei darin beweglichser Ventilkugel (17) einzusetzen (Figur 1).

Fig. 1

**0079548**
HENKEL KGaA
ZR-FE/Patente
Bor/C

Patentanmeldung
D 6476 EP

"Verschluß eines Verpackungsbehälters"

Die Erfindung betrifft einen Verschluß eines Verpackungsbehälters für flüssiges oder rieselfähiges Produkt mit mechanisch stabilisierender Hülle. Letztere kann als Faltschachtel, Kunststoff-Flasche, Metall- bzw. Glasgebinde oder dergleichen ausgebildet sein.

Ein Verpackungsbehälter mit mechanisch stabilisierender Hülle und darin eingesetzter, insbesondere ausgehend von einem Vorformling geblasener, dichtender Auskleidung, bei dem Hülle und Auskleidung nach getrennter Herstellung mit Hilfe eines an ihre Öffnungen adaptierten, eine Produktaustrittsöffnung der Auskleidung umfassenden Adapterdeckels miteinander gekoppelt werden, ist aus der DE-OS 30 45 710.4 bekannt. In diesem Verbindungssystem zweier Packmittel-Komponenten hat der Adapterdeckel im wesentlichen eine reine Verbindungsfunktion und dient dazu, das Konfektionieren zu vereinfachen. Dabei wird der Adapterdeckel bereits vor dem Umformen, d. h. Aufblasen, des zum Herstellen der Auskleidung verwendeten Vorformlings über letzteren geschoben und dort in einer gegen Verdrehung in Umfangsrichtung gesicherten Position arretiert. Durch Umformen des Vorformlings, beispielsweise im Streckblasverfahren, erfolgt dann - vor oder nach dem Einschieben in die Hülle - auch ein Sichern des Adapterdeckels in axialer Richtung der aus dem Vorformling hergestellten Auskleidung. Zum Entstehen der festen, unlösbaren Verbindung zwischen Auskleidung und Adapterdeckel ist also das Aufsetzen des letzteren bereits auf den Vorformling und das Aufblasen des Vorformlings durch

. . .

0079548
HENKEL KGaA
ZR-FE/Patente

2

den Adapterdeckel hindurch, insbesondere mit Hilfe eines gesonderten Aufnahme- bzw. Blasdorns, erforderlich. Die im Bekannten vorgesehenen Adapterdeckel bestehen daher im wesentlichen aus einem die Produktaustrittsöffnung umgebenden Ringbereich mit den Kupplungsteilen zum Verbinden von Auskleidung und Hülle.

Aus der DE-OS 30 26 067.4 ist ferner eine Dosiereinrichtung mit Kugelventil zum Aufsetzen auf einen Flüssigkeitsbehälter mit in einer Schwenkstellung des Behälters dessen Ausgießöffnung verschließender Ventilkugel bekannt. Die behälterseitige Auslaßöffnung dieser Dosiervorrichtung wird durch eine seitliche, schlitzförmige Öffnung eines in axialer Richtung der Deckelöffnung verlaufenden Ventilkugelführungsrohrs gebildet. Das Dosieren mit der bekannten Dosiereinrichtung erfolgt durch Druck auf den entsprechend flexiblen Behälter, dabei werden dosierte "Spritzer" abgegeben.

Der Erfindung liegt die Aufgabe zugrunde, den Verschluß des Verpackungsbehälters eingangs genannter Art mit einer Dosiervorrichtung mit Kugelventil und einer in einer Schwenkstellung des Behälters dessen Ausgießöffnung verschließenden Ventilkugel zum Aufsetzen auf den Behälter zu schaffen. Der Verpackungsbehälter soll ferner wiederverschließbar sein und einen auch für hygroskopische Pulverprodukte dichten Verschluß aufweisen, welcher mit einer Kindersicherung gegen das unbefugte Öffnen zu versehen ist. Die erfindungsgemäße Lösung besteht darin, daß in die Produktöffnung eines auf die Hülle und gegebenenfalls deren dichtende Auskleidung adaptierten Deckels ein durchgehender Rohrstutzen mit einer Bodenöffnung an seinem dem Inneren des Behälters zugewandten Längsende angeformt ist und daß sich im Stutzen ein einen Dichtkonus

. . .

mit Ventilkugeldichtsitz am Stutzenauslaßlängsende und eine Kugelkammer an der das Stutzeneinlaßlängsende bildenden Bodenöffnung aufweisendes Rohrstück mit frei darin beweglicher Ventilkugel befindet.

In einer Ausführungsform soll der Stutzen an seinem dem Innern des Behälters zugewandten Ende bzw. Boden eine einen abschnittsweise oder ganz umlaufenden Bund auf der Innenfläche aufweisende Bodenöffnung besitzen. Beispielsweise unter dieser Voraussetzung kann ein einen Dichtkonus mit Ventilkugeldichtsitz an einem Längsende - der Auslaßseite des Behälterverschlusses - und eine Kugelkammer an dem anderen Längsende - der der Bodenöffnung des Stutzens zuzuwendenden Einlaßseite des Verschlusses - aufweisendes Rohrstück in Form eines Kugelkäfigs mit frei darin beweglicher Ventilkugel als gesondertes Bauteil passend in den Stutzen bis zum Anschlag an den Bund vorgesehen bzw. eingesetzt werden.

Das Einsetzen dieser Dosiervorrichtung in den Rohrstutzen des Adapterdeckels erfolgt insbesondere nach Auffüllen des Behälters mit dem vorgesehenen flüssigen oder rieselfähigen Produkt. Während des gesamten Herstellungsvorgangs des Behälters bleibt also der Durchgang durch den Adapterdeckel für einen eventuellen Aufnahmedorn frei. Um zu verhindern, daß bei Betrieb der Dosiervorrichtung die Ventilkugel aus dem Kugelkäfig fällt, soll die der Bodenöffnung des Rohrstutzens zuzuwendende Fläche der Kugelkammer mit einem entsprechenden Gitter versehen bzw. als Lochscheibe ausgebildet werden. Bei Ausbildung des der Kugelkammer gegenüberliegenden Auslaßendes des in den Rohrstutzen einzusetzenden Rohrstücks als Dichtkonus ergibt sich die vorteilhafte Möglichkeit des Verschließens der Pro-

. . .

4

duktaustrittsöffnung am Konus, wenn eine auf den Auslaß aufzusetzende Verschlußkappe auf ihrer der Austrittsöffnung zugewandten Innenfläche einen in die Öffnung eingepaßten oder auf die Öffnung aufgepaßten Dichtkonus besitzt. Durch Aufsetzen einer solchen Verschlußkappe wird dann die Produktaustrittsöffnung einmal durch die zusammenwirkenden Dichtkonen und andererseits durch die Kupplung der Kappe verschlossen. Die Kupplung der Kappe kann bei Bedarf mit einer Kindersicherung versehen werden.

Wesentliche Änderungen betreffend den Herstellungsgang ergeben sich auch nicht, wenn der vorgenannte Kugelkäfig einteilig mit dem an den Hals angesetzten Stutzen hergestellt wird, d. h. wenn an die Innenwand des Stutzens ein über einen Konus in der Produktaustrittsöffnung auslaufendes Rohrstück angesetzt, insbesondere eingeformt, wird.

Der gegebenenfalls auf der Behälterinnenseite des Adapterdeckels vorspringende Teil des Rohrstutzens kann als Schweißstutzen zum Anschweißen einer vorzugsweise aus Kunststoff bestehenden Auskleidung des erfindungsgemäßen Verpackungsbehälters angewendet bzw. ausgebildet werden. Es läßt sich durch diese Schweißverbindung eine dichte, verdrehsichere Kupplung von Adapterdeckel und Auskleidung herstellen, ohne daß die fraglichen Kontaktbereiche durch Formgebung speziell vorzubereiten wären.

. . .

5

Anhand der schematischen Darstellung von Ausführungsbeispielen werden weitere Einzelheiten der Erfindung erläutert. Es zeigen:

Fig. 1   in zwei Schnittebenen den Verschluß mit und ohne eingesetzten Kugelkäfig;

Fig. 2   einen Schnitt durch einen Kugelkäfig; und

Fig. 3   einen Schnitt durch einen Verschluß mit eingeformtem Kugelkäfig.

Bei dem Ausführungsbeispiel nach Fig. 1 und 2 besitzt der Adapterdeckel 1 eine Produktaustrittsöffnung 2, in die ein durchgehender Rohrstutzen 3 eingeformt ist. Der Rohrstutzen 3 kann beliebigen Querschnitt besitzen, bevorzugt wird jedoch die Zylinderform. Auf die Auslaßseite 4 des Rohrstutzens 3 kann eine, insbesondere über eine Kindersicherung bzw. eine Verschraubung 5 zu sichernde Verschlußkappe 6 zu stülpen sein. Auf der Innenseite kann die Verschlußkappe 6 einen umlaufenden Klemmsteg 7 zum Abdichten besitzen.

Im Ausführungsbeispiel nach Fig. 1 besitzt der Rohrstutzen 3 an seinem dem Innern des Behälters 8 zugewandten Boden eine Bodenöffnung 9 mit auf deren Innenseite teilweise oder ganz umlaufendem Bund 10. Der an die Bodenöffnung 9 angrenzende Bereich auf der Innenseite des Rohrstutzens 3 kann sich - gesehen von der Auslaßseite - über einen Konus 11 auf einen etwas geringeren Durchmesser verjüngen und mit diesem Durchmesser am unteren Ende des Rohrstutzens 3 an dem nach innen vorspringenden Bund 10 enden.

Ersichtlich werden in Fig. 1 verschiedene Ausführungsbeispiele

. . .

0079548

HENKEL KGaA

ZR-FE/Patente

6

bzw. verschiedene Herstellungsstufen in zwei Schnittebenen zugleich dargestellt. Bei dem Ausführungsbeispiel auf der rechten Seite bildet die mit dem Rohrstutzen 3 fluchtende Produktaustrittsöffnung 2 des Adapterdeckels 1 einen durchgehenden, im wesentlichen zylindrischen Ausgang des Behälters 8. Im anderen Ausführungsbeispiel (links) kann der Adapterdeckel 1, insbesondere nach dem Abfüllen der zu verschließenden Verpackung, zusätzlich mit einem Kugelkäfig 16 (vergleiche auch Fig. 2) bestückt werden. Der Kugelkäfig 16 wird vorzugsweise mit einer Ventilkugel 17 und einer Lochscheibe 18 am behälterseitigen Verschluß-Einlaßende vorkonfektioniert. Dabei wird der Außendurchmesser des Kugelkäfigs 16 derart auf den Innendurchmesser des Rohrstutzens 3 im Anschluß an den Bund 10 abgestimmt, daß beim Einpressen des Käfigs 16 in den Stutzen 3 ein fester Sitz entsteht. Der Bund 10 der Bodenöffnung 9 dient dabei dazu, ein Durchdrücken des Kugelkäfigs 16 auszuschließen.

Gemäß Ausführungsbeispiel besteht der Kugelkäfig 16 aus einem einen Dichtkonus 19 mit Ventilkugeldichtsitz 20 an einem Längsende - dem Auslaßende - und eine Kugelkammer 21 am anderen, der Bodenöffnung 9 des Rohrstutzens 3 zuzuwendenden Längsende - dem Einlaßende - aufweisendes Rohrstück 22 mit darin freibeweglicher Ventilkugel 17. Dem Dichtkonus 19 am äußeren Ende des Rohrstücks 22 wird auf der der Produktaustrittsöffnung 2 zugewandten Innenfläche der Verschlußkappe 6 zweckmäßig ein in die Austrittsöffnung eingepaßter Deckel-Dichtkonus 23 zugeordnet.

Der Adapterdeckel 1 kann über einen beispielsweise umgeklappten Rand 24 an einer Kante des zu verschließenden Behälters 8

. . .

zwischen einem umlaufenden Deckelrand 25 und einem Arretiernocken 26 des Adapterdeckels 1 unverrückbar eingeklemmt werden. Außerdem kann eine Klebelasche 27 des Adapterdeckels 1 als Auflager einer anderen Kante des Behälters 8, beispielsweise des Kantenbereichs einer Kopfseitenlasche 28, dienen.

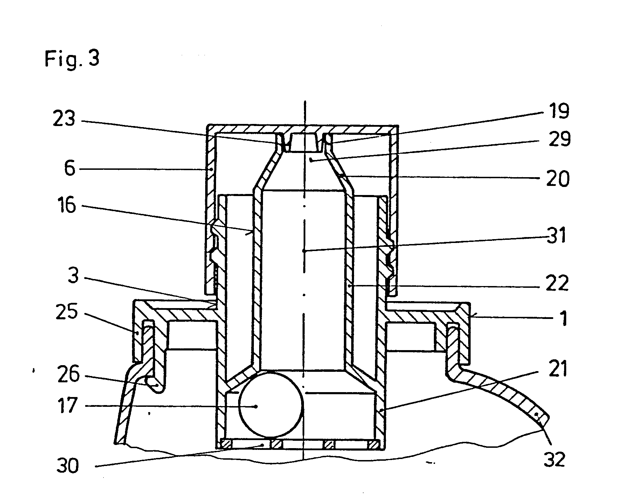

Ein weiteres Ausführungsbeispiel der Erfindung wird in Fig. 3 im Schnitt dargestellt. Dieser Verschluß unterscheidet sich von demjenigen nach Fig. 1 und 2 im wesentlichen dadurch, daß der aus dem Rohrstück 22, dem Dichtkonus 19 und der Kugelkammer 21 bestehende Kugelkäfig 16' einstückig einen Bestandteil des Rohrstutzens 3 des Adapterdeckels 1 bildet. Die Öffnung 29 des Dichtkonus 19 bzw. 20 und eine Öffnung 30 im Boden der Kugelkammer 21 können dabei auf einer Mittellinie 31 des Rohrstücks 16' miteinander fluchten. Im übrigen entsprechen die Befestigungselemente des Adapterdeckels 1 von Fig. 3 denjenigen der Fig. 1. Der Adapterdeckel 1 kann in Fig. 3 ebenso wie in vielen anderen Fällen auch auf einer Kunststoff-Flasche, einem Metall- oder Glasgebinde 32 befestigt werden.

Der erfindungsgemäße Rohrstutzen 3 wird vorzugsweise als Schweißstutzen zum dichten Verbinden bzw. Einschweißen in eine Öffnung einer im Innern des Behälters 8 vorgesehenen Auskleidung 33 ausgebildet (vgl. Fig. 1). Auf diese Weise läßt sich eine Kombinationsverpackung aus äußerer, tragender Hülle 8, insbesondere aus Karton, und innerer flüssigkeitsdichter Auskleidung 33, beispielsweise aus Schlauchfolie, herstellen. Der Adapterdeckel wird dabei nicht nur dichtend in die Öffnung der Auskleidung eingeschweißt sondern bildet zugleich das Verbindungselement von Hülle und darin befindlichem Produktbehälter. Das Füllen der fertig konfektionierten Verpackung erfolgt vorzugsweise durch die Adapter-Mündung, d. h. durch die Öffnung des Adapterdeckels.

Patentanmeldung
D 6476 EP

–8a.–

HENKEL KGaA
0079548
ZR-FE/Patente

## Bezugszeichenliste

 1 = Adapterdeckel

 2 = Produktauslaßöffnung

 3 = Rohrstutzen

 4 = Auslaßseite (3)

 5 = Verschraubung

 6 = Verschlußkappe

 7 = Klemmsteg

 8 = Behälter, Hülle

 9 = Bodenöffnung (3)

10 = Bund (9)

11 = Konus

16
16'= Kugelkäfig

17 = Ventilkugel

18 = Lochscheibe

19 = Dichtkonus

20 = Ventilkugel-Dichtsitz

21 = Kugelkammer

22 = Rohrstück

23 = Deckeldichtkonus

24 = umgeklappter Rand

25 = umlaufender Rand

26 = Arretiernocken

27 = Klebelasche

28 = Kopfseitenlasche

29 = Öffnung (19)

30 = Öffnung (21)

31 = Mittellinie

32 = Glasgebinde

33 = Auskleidung

9

P a t e n t a n s p r ü c h e

1. Verschluß eines Verpackungsbehälters für flüssiges oder rieselfähiges Produkt mit mechanisch stabilisierender Hülle, dadurch gekennzeichnet, daß in die Produktaustrittsöffnung (2) eines auf die Hülle (8) und gegebenenfalls deren Auskleidung (33) adaptierten Deckels (1) ein durchgehender Rohrstutzen (3) mit einer Bodenöffnung (9) an seinem dem Innern des Behälters zugewandten Längsende angeformt ist und daß sich im Stutzen (3) ein einen Dichtkonus (19) mit Ventilkugeldichtsitz (20) am Stutzenauslaßlängsende und eine Kugelkammer (21) an der das Stutzeneinlaßlängsende bildenden Bodenöffnung (9) aufweisendes Rohrstück (22) mit frei darin beweglicher Ventilkugel (17) befindet.

2. Verschluß nach Anspruch 1, dadurch gekennzeichnet, daß auf der Innenfläche der Bodenöffnung (9) des Rohrstutzens (3) ein abschnittsweise oder ganz umlaufender Bund (10) vorgesehen ist und daß das im Rohrstutzen (3) befindliche Rohrstück (22) als gesondertes Bauteil passend in den Rohrstutzen (3) bis zum Anschlag an den Bund (10) einzusetzen ist (Fig. 1).

3. Verschluß nach Anspruch 1 oder 2, dadurch gekennzeichnet, daß dem Auslaßende des Rohrstutzens (3) eine Verschlußkappe (6) zugeordnet ist und daß die Verschlußkappe (6) auf ihrer der Produktaustrittsöffnung (2) zugewandten Innenfläche einen in den Dichtkonus (19) des Rohrstücks (22) eingepaßten Deckeldichtkonus (23) besitzt.

4. Verschluß nach einem oder mehreren der Ansprüche 1 bis 3,

. . .

dadurch gekennzeichnet, daß die der Bodenöffnung (9) des Rohrstutzens (3) zuzuwendende Fläche der Kugelkammer (21) als Lochscheibe ausgebildet ist.

5. Verschluß nach einem oder mehreren der Ansprüche 1 bis 4, dadurch gekennzeichnet, daß an die Innenwand des Rohrstutzens (3) ein über eine Schulter bzw. einen Konus (19, 20) auf der Verschlußauslaßseite auslaufendes Rohrstück (22) angeformt ist (Fig. 3).

6. Verschluß nach Anspruch 5, dadurch gekennzeichnet, daß in den aus dem Rohrstück (22) und Teilen des Rohrstutzens (3) sowie dessen, insbesondere als Lochscheibe oder dergleichen ausgebildeten, Boden umschlossenen Kugelkäfig (16, 16') eine Ventilkugel (17) eingesetzt ist und daß der Dichtkonus (19) des Rohrstücks (22) als Ventilkugeldichtsitz (20) bei (über Kopf) nach untengeschwenktem Adapterdeckel (1) ausgebildet ist.

7. Verschluß nach einem oder mehreren der Ansprüche 1 bis 6, dadurch gekennzeichnet, daß der Rohrstutzen (3) gegebenenfalls mit einer dichtenden Auskleidung (33) des Behälters (8) verschweißt ist.

112

Fig. 1

Fig. 2

Fig. 3

23

19

29

6

20

16

31

3

22

25

1

26

21

17

30

32